# NEUE EUROPÄISCHE PATENTSCHRIFT

(11) **EP 0 716 258 B2**
(45) Veröffentlichungstag und Bekanntmachung des Hinweises auf die Entscheidung über den Einspruch: **11.12.2002**
(45) Hinweis auf die Patenterteilung: 22.03.2000
(21) Anmeldenummer: 95118941.4
(22) Anmeldetag: 01.12.1995
(51) Int. Cl.: F16L 13/14, F16L 11/15, F16L 13/02, F16L 5/00

(54) **Flexible Gasleitung**
Flexible gas pipe
Conduite flexible de gaz

(30) Priorität: 08.12.1994 DE 4443582; 22.12.1994 DE 4446001
(43) Veröffentlichungstag der Anmeldung: 12.06.1996
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 348 685
- DE-A- 2 251 711
- DE-A- 2 506 874
- DE-A- 2 608 662
- DE-A- 3 808 383
- DE-A- 4 109 614
- DE-A- 4 315 175
- DE-C- 974 608
- DE-U- 9 307 301
- DE-U- 9 417 111
- DE-U- 9 419 622
- FR-A- 1 534 013
- FR-A- 2 298 756
- US-A- 2 449 369
- US-A- 2 556 544
- US-A- 4 449 853

## Beschreibung

Die Erfindung betrifft eine durch ein Wellrohr gebildete flexible Gasleitung, insbesondere für die Verlegung in einem Gebäude und die Hindurchführung durch Decken, Wände und Fundamente.

Solch eine flexible Gasleitung ist z.B. aus der EP 0 348 685 bekannt geworden. Diese zeigt eine flexible Gasleitung, die auch für die Verlegung in einem Gebäude und die Hindurchführung durch Wände, Dekken und Fundamente einsetzbar wäre, bestehend aus einem Gas führenden Wellrohr, das stirnseitig an ein zylindrisches Rohr angeschweißt ist, das von einem schlauchförmigen Geflecht sich kreuzender Drähte oder Litzen umgeben ist, das sich zumindest teilweise über dieses Rohr erstreckt und an diesem befestigt ist, wobei das Rohr und das schlauchförmige Geflecht von einem Rohrstück dicht umgeben sind. Bei dieser Ausführung einer Gasleitung ist die Verbindung des am Wellrohr angeschweißten zylindrischen Rohres mit dem Schlauchgeflecht durch Schweißverbindungen bewerkstelligt. Das ist nachteilig, weil ein wesentlicher Teil der feinen Drähte des Drahtgeflechtschlauches während des Anschweißvorganges am Ort der Verschweißung abschmilzt und dadurch nicht befestigt ist. Außerdem tritt eine Verminderung der Korrosionsfestigkeit durch die Erhitzung des Materials beim Schweißvorgang auf, die wegen der Verlegung im Erdreich oder in im Laufe der Zeit feucht werdendem Kellermauerwerk für eine Gasleitung nicht tragbar ist.

Durch die DE 25 06 874 A1 ist es bekannt geworden, einen Elastomerschlauch mit einer Drahtgeflechtummantelung an Rohrstücken zu befestigen. Diese weisen für die Befestigung eine Außenverdickung auf. Über den mit der Drahtgeflechtummantelung versehenen Elastomerschlauch werden endseitig Rohrstücke geschoben, in welche beidseitig der Außenverdikkung des Rohres Vertiefungen eingepreßt werden, die die Drahtgeflechtummantelung und den Elastomerschlauch auf dem Rohr festhalten. Für Wellrohre ließe sich diese Befestigungsart nicht anwenden, denn diese würden beim Einpressen der Vertiefungen zerstört werden.

Eine verschweißungsfreie Befestigung des Drahtgeflechtschlauches ist durch die US-A-25 56 544 vorgeschlagen, durch ein axial verschobenes Werkzeug einen mit radialem Vorsprung versehenen Ring so zu verformen, daß der Vorsprung von der Außenseite des Ringes auf die Innenseite radial wandert und dann noch ein daneben liegendes Rohr verformt.

Eine verschweißungsfreie Verbindung eines über einem Wellrohr angeordneten Geflechtschlauches ist auch aus der Fr 1 534 013 bekannt geworden, wo eine Hülse auf eine starkwandige Muffe aufgewalzt wird, die eine Halterung für ein weiterführendes Rohr bildet.

Die Erfindung vermeidet die Nachteile des Standes der Technik. Es ist die Aufgabe der Erfindung, in einfacher Weise eine sehr preiswert herstellbare, einfach aufgebaute flexible korrosionsbeständige Gasleitung ohne den Einsatz von Schweißarbeiten zu schaffen, die sich überall leicht den örtlichen Gegebenheiten anpassen und daher sehr leicht und schnell verlegen läßt.

Die Erfindung besteht in einer flexiblen Gasleitung, insbesondere für die Verlegung in einem Gebäude und die Hindurchführung durch Wände, Decken und Fundamente, bestehend aus einem Gas führenden aus korrosionsfestem Stahl gefertigten Wellrohr, das von einem schlauchartigen Geflecht sich kreuzender Drähte oder Litzen umgeben ist und mit dem umgebenden Geflecht am Ende des Wellrohres dadurch fest miteinander verbunden ist, daß an das Wellrohr stirnseitig ein zylindrisches Rohr angeschweißt ist, daß das das Wellrohr umgebende Geflecht sich zumindest teilweise über dieses zylindrische Rohr erstreckt, daß das zylindrische Rohr und das dieses umgebende Geflecht am.Ende des Wellrohres von einem Rohrstück dicht umgeben sind und daß das zylindrische Rohr und das dieses umgebende Geflecht sowie das Rohrstück durch mindestens eine eingepreßte das Rohr (5), das Geflecht (2) und das Rohrstück (4) verformende Vertiefung fest miteinander verbunden sind.

Bei dieser Gasleitung sind die Nachteile. die durch ein Verschweißen von Wellrohr, schlauchförmigem Geflecht und zylindrischem Rohr auftreten, vermieden denn diese Teile sind miteinander durch das Einwalzen der Rillen allein mechanisch auf kaltem Wege miteinander verbunden und weisen trotzdem eine sehr hohe Festigkeit der Verbindung auf, die die Festigkeit der Schweißverbindung noch übertreffen kann, da das Anschweißen der Drähte oder Litzen des Geflechtes deren Festigkeit unmittelbar neben oder an der Schweißstelle erheblich mindern kann, ganz abgesehen von dem Verlust an Korrosionsfestigkeit.

Dabei ist es vorteilhaft, wenn die eingepreßte Vertiefung eine in Umfangsrichtung des Rohrstückes oder achsparallel verlaufende Sicke, eine in Umfangsrichtung des Rohrstückes verlaufende Rille oder Teile einer solchen Rille, eine kreisförmige oder ovale oder rechteckige oder rautenförmige oder dachförmige Vertiefung ist oder durch eine Vieizahl solcher geometischer Eindrücke realisiert ist.

Sind das zylindrische Rohr und das über das dieses ummantelnde Geflecht geschobene Rohrstück aus dünnem und/oder weichem Material hergestellt ist es vorteilhaft, wenn die eingepreßte Vertiefung kissenförmig ist, um sicherzustellen, daß das Gas führende zylindrische Rohr keinerlei Risse durch den Vorgang des Einpressens der Vertiefung(en) erhält.

Die eingepreßten Vertiefungen können verschiedene geometrische Formen aufweisen, z.B. in Form von Sicken, Kugelkalotten, Pyramiden, Kissen. Quadern und ähnlichen geometrischen Körpern.

Je nach der Wahl des Materiales, aus dem das zylindrische Rohr und das über das dieses ummantelnde Geflecht geschobene Rohrstück hergestellt ist. kann es auch zweckmäßig sein, daß die eingepreßte Vertiefung in dem Rohrstück scharfkantig ist und bei einem dünnwandigen zylindrischen Rohr in diesem fließende Kanten aufweist. Preßt man mit einem scharfkantigen Preßwerkzeug, so erzeugt man in dem äußeren Rohrstück scharfkantige Vertiefungen, an deren scharfen Kanten sich das Geflecht besonders gut festsetzt. wenn man bei diesem Preßvorgang das innen liegende zylindrische Rohr von innen nicht oder nur weich abstützt übertragen sich die scharfen Kanten nicht auf das innen liegende zylindrische Rohr, sodern es bilden sich an diesem nur weiche kissenförmig gewölbte Kanten der Vertiefung, die nicht zu einer Rißbildung führen können aber die Vertiefungen im übergeschobenen Rohrstück bei Zugkräften auf das Geflecht auffangen und halten.

Vorteilhaft für eine gute Haftwirkung bei starken am Geflecht wirksamen Zugkräften ist es, wenn die Vertiefungen in einer oder mehreren Radialebenen mit Abstand voneinander angeordnet sind.

Zweckmäßig ist es, wenn das über dem Geflecht angeordnete Rohrstück kürzer als das zylindrische Rohr ist. Dann liegt das Ende des zylindrischen Rohres frei für die Durchführung von Schweiß- oder anderen Befestigungsarbeiten.

Vorteilhaft aus Gründen der Korrosionsfestigkeit ist es, wenn das Wellrohr und das dieses umgebende Geflecht sowie das Rohrstück am Ende des Wellrohres aus dem gleichen Stahlmaterial vorzugsweise Edelstahl, hergestellt sind.

Um Beschädigungen während des Transportes oder der Lagerung oder beim Einbau der flexiblen Gasleitung zu vermeiden ist es zweckmäßig, wenn das zylindrische Rohr an seinem dem Wellrohr zugewandten Ende in seinem Durchmesser verjüngt, eingezogen oder mit einem den Durchmesser verkleinernden Absatz versehen ist und wenn die ringförmige Schweißnaht einen geringeren Außendurchmesser als das zylindrische Rohr aufweist.

Ein einziger aus dem genannten Geflecht bestehender Schlauch reicht im allgemeinen aus, um die zulässigen Längskräfte aufzunehmen, die das vorzugsweise aus 0,3 bis 0,8 mm starkem Edelstahl bestehende Wellrohr nicht aufzunehmen vermag. Um radial wirkende Kräfte besser aufnehmen zu können ist es vorteilhaft, wenn über dem schlauchförmigen Geflecht mindestens ein weiteres schlauchförmiges Geflecht befindlich ist.

Es ist vorteilhaft, wenn an die freie Stirnseite des zylindrischen Rohres ein weiteres Rohr, ein Absperrventil, eine Rohrkupplung oder eine sonstige Armatur angeschweißt ist.

Um Beschädigungen des schlauchförmigen Geflechtes und / oder des zylindrischen Rohres und / oder der das zylindrische Rohr mit dem Wellrohr verbindenden Schweißstelle zu vermeiden, ist es vorteilhaft, wenn das zylindrische Rohr an seinem dem Wellrohr zugewandten Ende in seinem Durchmesser verjüngt, eingezogen oder mit einem den Durchmesser verkleinernden Absatz versehen ist und wenn die ringförmige Schweißnaht einen geringeren Außendurchmesser als das zylindrische Rohr aufweist.

Durch dieses Geflecht ist darüber hinaus eine derartige Rauhigkeit der Außenfläche der Gasleitung gegeben, daß einfaches Einmauern oder noch wirkungsvoller das Eingießen von erhärtender Vergußmasse in den von der Gasleitung durchsetzten Gebäudewanddurchbruch als Auszugsicherung ausreichen.

Dabei werden Durchbrüche durch die Außenwand des Gebäudes oder durch deren Fundament, aber auch durch eine Sohlplatte nach Verlegung des vom Geflecht ummantelten Wellrohres mit einer erhärtenden Gußmasse ausgefüllt und dadurch wieder verschlossen. Da diese flüssig eingegossene Gußmasse sich nicht nur eng an die Drähte oder Litzen des das Wellrohr umschließenden Geflechtes anlegt, sondern meist auch die Zwischenräume zwischen benachbarten Drähten oder Litzen durchdringt und in den Raum zwischen dem Geflecht und dem Wellrohr eindringt, entsteht eine besonders feste Verbindung zwischen dem Gas führenden Wellrohr und der Außenwand des Gebäudes bzw. deren Fundament, die eine voll ausreichende Auszugsicherung darstellt.

Um dem erdverlegten Teil dieser Gebäudeeinführungsvorrichtung für Gas eine hohe Korrosionsfestigkeit and damit eine lange Lebensdauer zu verleihen, ist es zweckmäßig daß das Wellrohr und das dieses umgebende Geflecht sowie das Rohrstück am Ende des Wellrohres aus dem gleichen Stahlmaterial vorzugsweise Edelstahl, hergestellt sind.

Es ist vorteilhaft, daß zwischen dem Wellrohr und dem dieses umgebenden Geflecht sowie dem Rohrstück am Ende des Wellrohres eine wasser- und säureresistente Kunststoffmasse befindlich ist.

Zur Verwendung dieser Gasleitung zur Herstellung einer kompletten Gas-Gebäudesinführungsvorrichtung ist es zweckmäßig, wenn an das Rohrstück oder an das an dieses angeschweißte weitere Stahlrohrstück ein Verbinder Kunststoffrohr/Stahlrohr oder ein anderer Verbinder oder ein Absperrventil angeschweißt ist.

Ein wesentlicher Gedanke der vorliegenden Erfindung besteht somit in der Verwendung eines Wellrohres, welches von einem Geflecht sich kreuzender Drähte oder Litzen umgeben ist, wobei das Wellrohr und das dieses umgebende Geflecht am Ende des Wellrohres fest miteinander durch einen rein mechanischen Preßvorgang verbunden sind, als Gasleitung. Ein weiterer wesentlicher Gedanke der vorliegenden Erfindung besteht darin, daß man die Kombination Wellrohr/ Ummantelungsgeflecht als Auszugssicherung verwenden kann, wenn man mittels einer erhärtenden Vergußmasse diese Kombination im Gebäudefundament, der Gebäudeaußenwand oder der Gebäudesohlplatte verankert.

Durch das Erhärten der Vergußmasse wird ein ganz wesentlicher Vorteil für die Sicherheit gegen Gasexplosionen erreicht, die entstehen, wenn infolge von einem Auftreten von hohen Zugkräften in der erdverlegten Gasleitung innerhalb des Gebäudes die Gasleitung reißt oder durch Deformation undicht wird: Das Wellrohr und das dieses umgebende schlauchartige Geflecht sitzen so fest in der Gebäudewand, daß sie nicht aus dieser herausgezogen werden können. Dadurch entsteht ein Bruch in der Gasleitung immer nur außerhalb des Gebäudes im Erdreich, wo keine Explosionsgefahr besteht.

Gleichzeitig wird damit eine wirkungsvolle Sollbruchstelle geschaffen, die außerhalb des Gebäudes im Erdreich liegt, weil Längskräfte im erdverlegten Teil der Gasleitung von der Gebäudewand oder dessen Fundamenten aufgenommen werden und daher nicht in den Teil der Gasleitung eintreten können, der im Gebäude verlegt ist. Denn bei Verwendung einer erhärtenden Vergußmasse zum Festlegen der Gasleitung in dem Durchbruch der Gebäudewand dringt diese in das Geflecht ein und durch das Geflecht hindurch in die Wellen des Wellrohres und gibt daher nach Erhärten eine kaum zu überbietende Festigkeit.

Dabei ist das Einpressen der Vertiefungen auf unterschiedliche Weise möglich: Es kann durch lineare radiale Verschiebung von Preßwerkzeugen ebenso wie durch ein Einwalzen, ein Eindrücken von sich drehenden Rollen oder Walzen in die Oberfläche des Rohrstükkes erfolgen. Während des Pressens kann die Innenwandung des zylindrischen Rohres z.B. durch ein hydraulisches Kissen oder radial bewegliche Gegenwerkzeuge abgestützt werden, braucht es aber nicht.

Die Verwendung eines mit einem Geflecht ummantelten Wellrohres als Gasleitung bringt als wesentliche Vorteile:
- einfache Herstellung
- Herabsetzung der Herstellungskosten,
- Erleichterung der Verlegung durch Flexibilität,
- wirkungsvolle Auszugsicherung bei Zugkräften auf der erdverlegten Gasleitung
- eine wirkungsvolle Sollbruchstelle, die außerhalb des Gebäudes im Erdreich liegt und schließlich
- erhöhte Sicherheit.

Das Wesen der Erfindung ist nachstehend anhand eines in der Zeichnung schematisch dargestellten Ausführungsbeispieles näher erläutert. Es zeigen:
- Fig 1: eine Ansicht der Gasleitung
- Fig.2: eine Ansicht des Überganges des Wellrohres und seiner Ummantelung in das zylindrische Rohrmit einer eingewalzten Rille, teilweise im Schnitt,

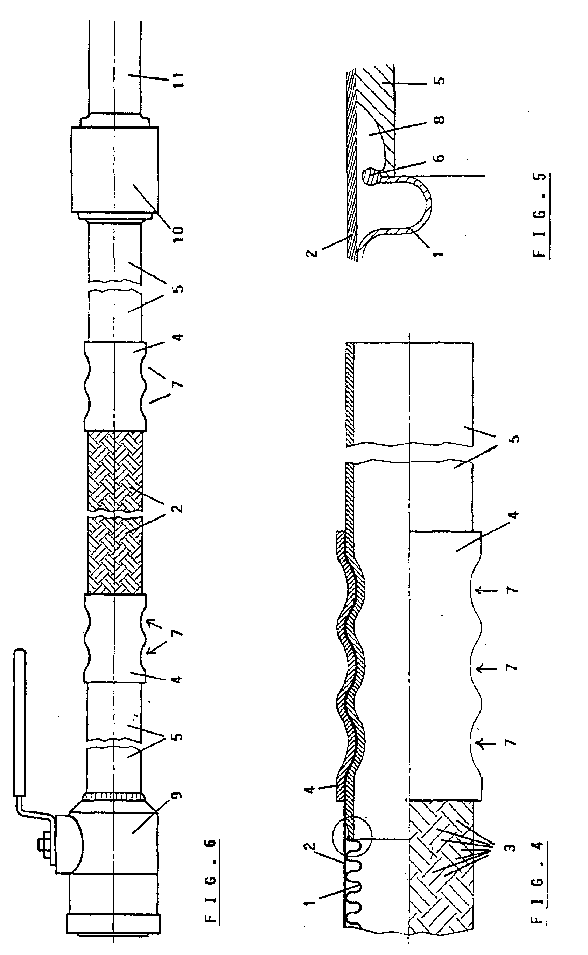

- Fig.3: eine Ansicht des Überganges des Wellrohres und seiner Ummantelung in das zylindrische Rohr mit zwei eingewalzten Rillen, teilweise im Schnitt,
- Fig.4: eine Ansicht des Überganges des Wellrohres und seiner Ummantelung in das zylindrische Rohr mit drei eingewalzten Rillen, teilweise im Schnitt,
- Fig.5: einen Schnitt durch die unter dem schlauchförmigen Geflecht liegenden Schweißnaht, mit derdas zylindrische Rohr endseitig an das Wellrohr-angeschweißt ist,
- Fig.6: eine Ansicht einer kompletten Einführungsvorrichtung für Gas in ein Gebäude,
- Fig.7: eine weitere Gasleitung,
- Fig.8: einen Querschnitt durch eine Gasleitung, bei der in das Rohrstück Rillen eingewafzt sind,
- Fig.9: einen Querschnitt durch eine Gasleitung, bei der in das Rohrstück Rillensegmente eingepreßt sind,
- Fig.10: einen Querschnitt durch eine Gasleitung, bei der in das Rohrstück kissenförmige Vertiefungen eingepreßt sind,
- Fig.11: einen Querschnitt durch eine Gasleitung bei der in das Rohrstück dachförmige Vertiefungen eingepreßt sind,
- Fig.12: eine perspektivische Ansicht eines rechteckigen Preßwerkzeuges
- Fig.13: eine perspektivische Ansicht eines dachförmigen Preßwerkzeuges
- Fig.14: eine perspektivische Ansicht eines keilförmigen Preßwerkzeuges
- Fig.15: eine perspektivische Ansicht eines kissenförmigen Preßwerkzeuges

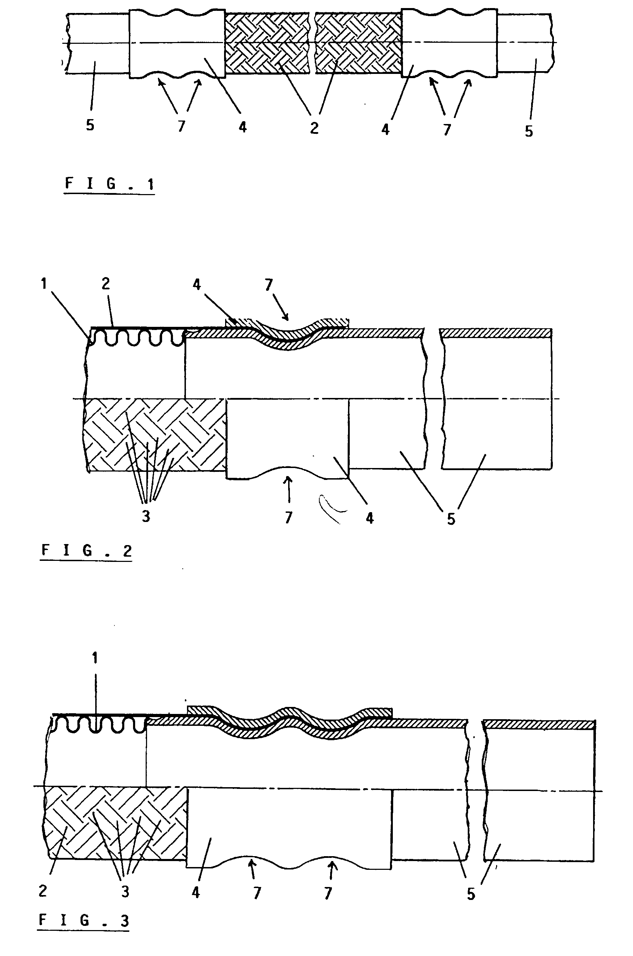

Die Gasleitung der Fig.1 besteht aus einem Wellrohr 1, das von einem schlauchförmigen Geflecht 2 sich kreuzender Drähte oder Litzen 3 umgeben ist. Das Wellrohr 1 und das dieses umgebende Geflecht 2 sind am Ende des Wellrohres 1 fest miteinander verbunden. Dazu sind an beide Enden des Wellrohres 1 je ein zylindrisches Rohr 5 mittels der Schweißnaht 6 (Fig.5) angeschweißt. Das schlauchförmige Geflecht 2 erstreckt sich zumindest teilweise bis über die zylindrischen Rohre 5, und die zylindrischen Rohre 5 und das diese umgebende Geflecht 2 sind von einem Rohrstück 4 dicht umgeben.

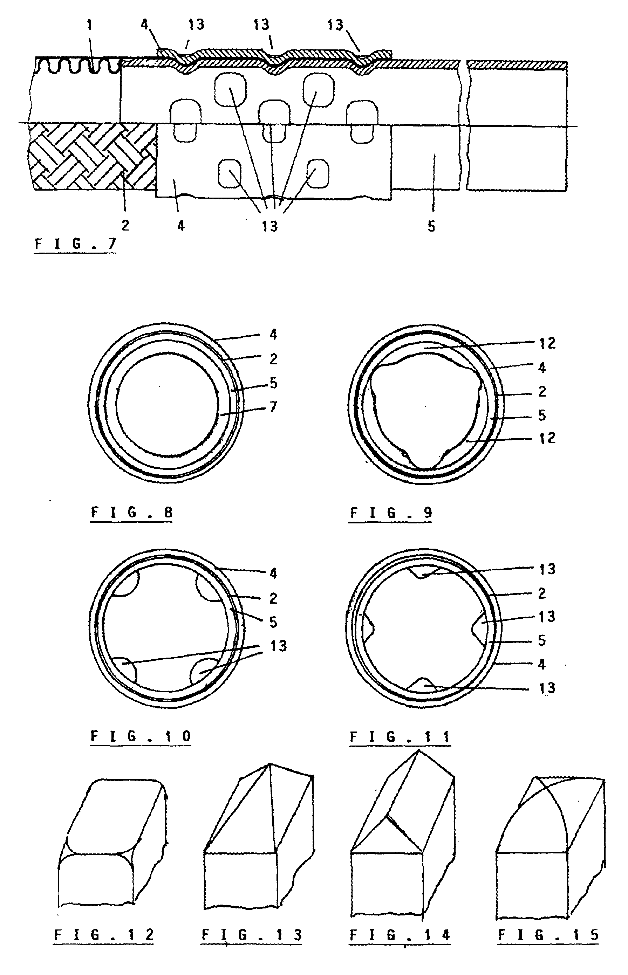

Das zylindrische Rohr 5 und das dieses umgebende Geflecht 2 sowie das diese beiden Teile umgebende Rohrstück 4 sind durch mindestens eine eingewalzte Rille 7 fest miteinander verbunden, wie es der Querschnitt der Fig 7 zeigt. Dieses ist eine feste mechanische Verbindung, die nurdurch Zerstören der Teile gelöst werden kann.

Das Einwalzen der Rille erfolgt z.B. derart, daß ein Kranz mit drei mit Preßkraft beaufschlagten Rädern um das Rohrstück 4 rotiert wird, nachdem dieses über den vom schlauchförmigen Geflecht 2 ummantelten Teil des zylindrischen Rohres 15 geschoben ist.

Anstelle der Rillen 7 können aber auch Sicken 12 in das Rohrstück 4 eingepreßt werden, die dann wie Segmente einer Rille aussehen, wenn sie in Radialebenen verlaufen.

Zur Verstärkung der radialen Festigkeit kann es zweckmäßig sein, daß über dem schlauchförmigen Geflecht 2 mindestens ein weiteres schlauchförmiges Geflecht befindlich ist.

Das Wellrohr 1 und das dieses umgebende Geflecht 2 sowie das Rohrstück 4 am Ende des Wellrohres 1 sind aus dem gleichen Stahlmaterial vorzugsweise Edelstahl, hergestellt.

An das zylindrische Rohr 5 am linken Ende des Wellrohres 1 ist ein Absperrventil 9 angeschweißt. An das zylindrische Rohr 5 am rechten Ende des Wellrohres 1 ist ein Verbinder 10 Kunststoffrohr 11/ Stahlrohr 5 in Form einer speziell hierfür entwickelten Kupplung angeschweißt. Dadurch ist eine komplette Gas-Gebäudeeintührungsvorrichtung erzeugt. Dabei ist das Kunststoffrohr 11 und der Verbinder 10 im Erdreich verlegt.

Anstelle von Rillen oder in Radial- oder Axialebenen verlaufenden Sicken können auch andere Vertiefungen 13 in das Rohrstück 4 eingepreßt werden, wie es in Fig.7 dargestellt ist. Dazu können Preßwerkzeuge verwendet werden, wie sie z.B. in den Fig. 12 bis 15 dargestellt sind

Beim Einbau einer solchen kompletten Gas-Gebäudeeinführungsvorrichtung kann diese durch die Flexibilität des aus dem Wellrohr 1 und dem schlauchförmigen ummantelnden Geflecht 2 bestehenden Gasleitungsabschnittes in sehr einfacher Weise verlegt und den örtlichen Gegebenheiten angepaßt werden. Nach dieser lockeren Verlegung werden Wand-, Decken- und Fundamentdurchbrüche im Gebäude, durch die diese fexible Gasleitung verlegt ist, durch eine flüssige, nach dem Eingießen in die Durchbrüche erhärtende Vergußmasse verschlossen. Dadurch erhält die flexible Gasleitung einen sehr festen Sitz. Denn die Vergußmasse legt sich nicht nur an die rauhe Oberfläche des Geflechtes an, sondern durchdringt das Geflecht zumindest teilweise und tritt in die Rillen des Wellrohres 1 ein. Bei starken Zugkräften auf das erdverlegte Kunststoffrohr 11 der Gasleitung, wie sie auftreten, wenn Erdarbeitsmaschinen unerwartet bei ihren Arbeiten eine Gasleitung herausziehen, tritt ein Bruch der Gasleitung nicht innerhalb des Gebäudes auf, weil alle Zugkräfte von dem vom Geflecht ummantelten Wellrohr über die erhärtete Vergußmasse auf das Gebäudefundament abgeleitet werden. Der Bruch der Gasleitung erfolgt in solchen Fällen außerhalb des Gebäudes im Erdreich und löst daher keine Gasexplosion aus.

Zur Verhinderung von durch Reibung beim Transport oder während der Herstellung entstehenden Beschädigungen ist es zweckmäßig, daß das zylindrische Rohr 5 an seinem dem Wellrohr 1 zugewandten Ende in seinem Durchmesser verjüngt, eingezogen oder mit einem den Durchmesser verkleinernden Absatz 8 versehen ist und daß die ringförmige Schweißnaht 6 einen geringeren Außendurchmesser als das zylindrische Rohr 15 aufweist.

## Patentansprüche

1. Flexible Gasleitung,
insbesondere für die Verlegung in einem Gebäude und die Hindurchführung durch Wände, Decken und Fundamente,
bestehend aus einem Gas führenden,
aus korrosionsfestem Stahl gefertigten Wellrohr (1),
das von einem schlauchartigen Geflecht (2) sich kreuzender Drähte oder Litzen (3) umgeben ist
und mit dem umgebenden Geflecht (2) am Ende des Wellrohres (1) dadurch fest miteinander verbunden ist,
daß an das Wellrohr (1) stirnseitig ein zylindrisches Rohr (5) angeschweißt ist,
daß das das Wellrohr (1) umgebende Geflecht (2) sich zumindest teilweise über dieses zylindrische Rohr (5) erstreckt,
daß das zylindrische Rohr (5) und das dieses umgebende Geflecht (2) am Ende des Wellrohres (1) von einem Rohrstück (4) dicht umgeben sind
und daß das zylindrische Rohr (5) und das dieses umgebende Geflecht (2) sowie das Rohrstück (4) durch mindestens eine eingepreßte das Rohr (5), das Geflecht (2) und das Rohrstück (4) verformende Vertiefung (7) fest miteinander verbunden sind.

2. Vorrichtung nach Anspruch 1
**dadurch gekennzeichnet,**
**daß** die eingepreßte Vertiefung (7) eine in Umfangsrichtung des Rohrstückes (4) verlaufende Sikke (12), eine in Umfangsrichtung des Rohrstückes (4) verlaufende Rille, eine kreisförmige oder ovale oder rechteckige oder rautenförmige oder dachförmige Vertiefung ist.

3. Vorrichtung nach Anspruch 1,
**dadurch gekennzeichnet,**
**daß** die eingepreßte Vertiefung (7) kissenförmig ist.

4. Vorrichtung nach Anspruch 1,
**dadurch gekennzeichnet,**
**daß** die eingepreßte Vertiefung (7) in dem Rohrstück (4) scharfkantig ist und bei einem dünnwandigen zylindrischen Rohr (5) in diesem fließende Kanten aufweist.

5. Vorrichtung nach Anspruch 1
**dadurch gekennzeichnet,**
**daß** die Vertiefungen (7) in einer oder mehreren Radialebenen (12) mit Abstand voneinander angeordnet sind.

6. Vorrichtung nach Anspruch 1,
**dadurch gekennzeichnet,**
**daß** das am Ende des Geflechtes (2) angeordnete und dieses sowie das zylindrische Rohr (5) umgebende Rohrstück (4) kürzer als das an das Ende des Wellrohres (1) angeschweißte zylindrische Rohr (5) ist.

7. Vorrichtung nach Anspruch 1,
**dadurch gekennzeichnet,**
**daß** das Wellrohr (1) und das dieses umgebende Geflecht (2) sowie das Rohrstück (4) am Ende des Wellrohres (1) aus dem gleichen Stahlmaterial, vorzugsweise Edelstahl, hergestellt sind.

8. Vorrichtung nach Anspruch 1,
**dadurch gekennzeichnet,**
**daß** über dem schlauchförmige Geflecht (2) mindestens ein weiteres schlauchförmiges Geflecht befindlich ist.

9. Vorrichtung nach Anspruch 7,
**dadurch gekennzeichnet,**
**daß** das zylindrische Rohr (5) an seinem dem Wellrohr (1) zugewandten Ende in seinem Durchmesser verjüngt, eingezogen oder mit einem den Durchmesser verkleinernden Absatz (8) versehen ist und daß die ringförmige Schweißnaht (6) einen geringeren Außendurchmesser als das zylindrische Rohr (5) aufweist.

10. Verwendung eines Wellrohres (1), welches von einem Geflecht (2) sich kreuzender Drähte oder Litzen (3) umgeben ist,
wobei das Wellrohr (1) und das dieses umgebende Geflecht (2) am Ende des Wellrohres (1) fest miteinander dadurch verbunden sind,
daß an das Wellrohr (1) stirnseitig ein zylindrisches Rohr (5) angeschweißt ist,
daß das das Wellrohr (1) umgebende Geflecht (2) sich zumindest teilweise über dieses zylindrische Rohr (5) erstreckt,
daß das zylindrische Rohr (5) und das dieses umgebende Geflecht (2) am Ende des Wellrohres (1) von einem Rohrstück (4) dicht umgeben sind
und daß das zylindrische Rohr (5) und das dieses umgebende Geflecht (2) sowie das Rohrstück (4) durch mindestens eine eingepreßte das Rohr (5), das Geflecht (2) und das Rohrstück (4) verformende Vertiefung (7) fest miteinander verbunden sind, und mittels einer erhärtenden Vergußmasse im Gebäudefundament, der Gebäudeaußenwand oder der Gebäudesohlplatte verankert sind, in einer in ein Gebäude verlegten Gasleitung.

## Revendications

1. Conduite de gaz flexible, en particulier destinée à être posée dans un immeuble et à être passée à travers des mure, plafonds et fondations,
composée d'un tube annelé (1) conduisant le gaz, fabriqué en acier résistant à la corrosion,
qui est entouré d'une tresse tubulaire (2) faite de fils ou torons (3) qui se croisent, et
assemblé solidement à la tresse (2) qui l'entoure, à l'extrémité du tube annelé (1), de façon telle
qu'un tube cylindrique (5) est soudé en bout au tube annelé (1),
que la tresse (2) entourant le tube annelé (1) se prolonge au moins partiellement sur ce tube cylindrique (5),
que le tube cylindrique (5) et la tresse (2) qui l'entoure sont entourés étroitement par un tronçon de tube (4) à l'extrémité du tube annelé (1), et
que le tube cylindrique (5) et la tresse (2) qui l'entoure, ainsi que le tronçon de tube (4), sont assemblés rigidement entre eux au moyen d'une empreinte emboutie (7) formant le tube (5), la tresse (2) et le tronçon de tube (4).

2. Dispositif selon la revendication 1, **caractérisé en ce que** l'empreinte emboutie (7) est une moulure (12) s'étendant dans la direction circonférentielle du tronçon de tube (4), un sillon qui s'étend dans la direction circonférentielle du tronçon de tube (4), ou une empreinte circulaire, ovale, rectangulaire, en forme de losange ou en forme de toit.

3. Dispositif selon la revendication 1, **caractérisé en ce que** l'empreinte (7) est en forme de coussin.

4. Dispositif selon la revendication 1, **caractérisé en ce que** l'empreinte emboutie (7) formée dans le tronçon de tube (4) est à arêtes vives et, dans le cas d'un tube cylindrique (5) à paroi mince, présente des arêtes qui fluent dans le tube.

5. Dispositif selon la revendication 1, **caractérisé en ce que** les empreintes (7) sont disposées en étant espacées les unes des autres, dans un ou plusieurs plans radiaux (12).

6. Dispositif selon la revendication 1, **caractérisé en ce que** le tronçon de tube (4), disposé à l'extrémité de la tresse (2) et entourant cette dernière ainsi que le tube cylindrique (5), est plus court que le tube cylindrique (5) soudé à l'extrémité du tube annelé (1).

7. Dispositif selon la revendication 1, **caractérisé en ce que** le tube annelé (1) et la tresse (2) qui l'entoure, ainsi que le tronçon de tube (4) prévu à l'extrémité du tube annelé (1), sont fabriqués dans le même acier, de préférence en acier inoxydable.

8. Dispositif selon la revendication 1, **caractérisé en ce que** au moins une autre tresse tubulaire se trouve pardessus la tresse tubulaire (2).

9. Dispositif selon la revendication 7, **caractérisé en ce que** le tube cylindrique (5), au niveau de son extrémité qui est dirigée vers le tube annelé (1), est rétréci en diamètre, restreint ou muni d'un épaulement (8) qui rétrécit le diamètre, et **en ce que** le joint soudé annulaire (6) présente un plus petit diamètre extérieur que le tube cylindrique (5).

10. Utilisation d'un tube annelé (1) qui est entouré d'une tresse (2) faite de fils ou torons (3) qui se croisent,
où le tube annelé (1) et la tresse (2) qui entoure ce dernier sont assemblés solidement l'un à l'autre à l'extrémité du tube annelé (1), de façon telle
qu'un tube cylindrique (5) est soudé en bout au tube annelé (1),
que la tresse (2) qui entoure le tube annelé (1) s'étend au moins partiellement sur ce tube cylindrique (5),
que le tube cylindrique (5) et la tresse (2) qui l'entoure sont entourés étroitement par un tronçon de tube (4) à l'extrémité du tube annelé (1), et
que le tube cylindrique (5) et la tresse (2) qui l'entoure, ainsi que le tronçon de tube (4), sont assemblés rigidement entre eux au moyen d'une empreinte emboutie (7) formant le tube (5), la tresse (2) et le tronçon de tube (4),
et sont ancrés, au moyen d'une masse coulée durcissable, dans la fondation de l'immeuble, dans le mur extérieur de l'immeuble ou dans la dalle de plancher de l'immeuble, dans une conduite de gaz posée dans un immeuble.

## Claims

1. Flexible gas line, in particular for laying in a building and passing through walls, floors and foundations, consisting of a gas-conveying corrugated pipe (1) manufactured from stainless steel, which is surrounded by a tubular mesh (2) of intersecting wires or braids (3) and is connected securely to the surrounding mesh (2) at the end of the corrugated pipe (1) in that a cylindrical pipe (5) is welded to the front end of the corrugated pipe (1), in that the mesh (2) surrounding the corrugated pipe (1) extends at least partly over this cylindrical pipe (5), in that the cylindrical pipe (5) and the mesh (2) surrounding the latter are surrounded sealingly at the end of the corrugated pipe (1) by a pipe section (4) and in that the cylindrical pipe (5) and the mesh (2) surrounding the latter and the pipe section (4) are connected securely to one another by at least one impressed indentation (7) deforming the pipe (5), the mesh (2) and the pipe section (4).

2. Device according to claim 1, **characterised in that** the impressed indentation (7) is a corrugation (12) running in the circumferential direction of the pipe section (4), a groove running in the circumferential direction of the pipe section (4), a circular or oval or rectangular or rhombic or roof-shaped indentation.

3. Device according to claim 1, **characterised in that** the impressed indentation (7) is pillow-shaped.

4. Device according to claim 1, **characterised in that** the impressed indentation (7) in the pipe section (4) is sharp-edged and in the case of a thin-walled cylindrical pipe (5) exhibits flowing edges in the latter.

5. Device according to claim 1, **characterised in that** the indentations (7) are disposed a distance from one another in one or more radial planes (12).

6. Device according to claim 1, **characterised in that** the pipe section (4) disposed at the end of the mesh (2) and surrounding the latter and the cylindrical pipe (5) is shorter than the cylindrical pipe (5) welded to the end of the corrugated pipe (1).

7. Device according to claim 1, **characterised in that** the corrugated pipe (1) and the mesh (2) surrounding the latter and the pipe section (4) at the end of the corrugated pipe (1) are manufactured from the same steel material, preferably stainless steel.

8. Device according to claim 1, **characterised in that** at least one further tubular mesh is located over the tubular mesh (2).

9. Device according to claim 7, **characterised in that** at its end facing the corrugated pipe (1) the cylindrical pipe (5) is tapered in its diameter, narrowed or provided with a step (8) reducing the diameter, and **in that** the annular weld seam (6) exhibits a smaller outside diameter than the cylindrical pipe (5).

10. Use of a corrugated pipe (1) which is surrounded by a mesh (2) of intersecting wires or braids (3), whereby the corrugated pipe (1) and the mesh (2) surrounding the latter are connected securely to one another at the end of the corrugated pipe (1) in that a cylindrical pipe (5) is welded to the corrugated pipe (1) at the front end, in that the mesh (2) surrounding the corrugated pipe (1) extends at least partially over this cylindrical pipe (5), in that the cylindrical pipe (5) and the mesh (2) surrounding the latter are surrounded sealingly at the end of the corrugated pipe (1) by a pipe section (4), and in that the cylindrical pipe (5) and the mesh (2) surrounding the latter and the pipe section (4) are connected securely to one another by at least one impressed indentation (7) and anchored in the building foundation, the building outer wall or the building base slab by means of a hardening sealing compound, in a gas line laid into a building.
